# EUROPEAN PATENT SPECIFICATION

(11) **EP 2 798 214 B1**
(45) Date of publication and mention of the grant of the patent: **25.09.2019**
(21) Application number: 12810036.9
(22) Date of filing: 28.11.2012
(51) Int. Cl.: F04B 7/00, F04B 39/08, F04B 39/10

(54) **METHOD FOR MODULATING THE CAPACITY OF A COMPRESSOR PROVIDED WITH A SEMI-COMMANDED VALVE SYSTEM**
VERFAHREN ZUR MODULATION DER KOMPRESSORKAPAZITÄT MIT EINEM HALBGESTEUERTEN VENTILSYSTEM
PROCÉDÉ DE MODULATION DE LA CAPACITÉ D'UN COMPRESSEUR DOTÉ D'UN SYSTÈME DE SOUPAPE SEMI-COMMANDÉE

(30) Priority: 26.12.2011 BR PI1105379
(43) Date of publication of application: 05.11.2014
(73) Proprietor: Embraco Indústria de Compressores e Soluções em Refrigeração Ltda., 89219-100 Joinville, SC (BR)
(72) Inventor: LILIE , Dietmar Erich Bernhard, 89204-060 Joinville - SC (BR); ARCENO, Eduardo, 89219-210 Joinville - SC (BR); KREMER, Rodrigo, 89219-162 Joinville - SC (BR)
(74) Representative: Soldatini, Andrea
(86) International application number: PCT/BR2012/000487
(87) International publication number: WO 2013/097006

(56) References cited:
- EP-A1- 1 338 794
- DE-B3-102004 018 567
- JP-A- S5 779 287
- KR-A- 20080 033 745
- US-A- 3 844 686
- US-A1- 2007 272 178

## Description

### Field of the Invention

The present invention refers to a method for modulating a compressor provided with semi-commanded valve system.

Generally speaking, the present invention provides means for manipulating the forced opening and closing of suction valves and/or discharge valves of reciprocating compressors. By manipulating these valves it is also possible to control the capacity of a reciprocating compressor with fixed speed.

### Background of the Invention

With regard to conventional reciprocating compressor assemblies

It is already known from those skilled in the art that reciprocating compressors comprise machines and/or devices capable of altering the pressure of a working fluid as well as pumping it. In this sense, and in a more specific form, reciprocating compressors are capable of altering the pressure of a working fluid by controllably altering the volume of a compression chamber that is usually defined by a cylindrical chamber that is able to receive the working fluid and a movable piston. Therefore, due to the displacement of the movable piston occurring inside the compression chamber the volume thereof is reciprocatingly (decreased and increased) altered.

Additionally, it is also known from those skilled in the art that the inlet (suction) and removal (exhaustion) steps of the working fluid inside the compression chamber consist of critical steps to achieve a correct functioning of a reciprocating compressor. Furthermore, said steps directly impact the parameters of a compressor performance, and, for this reason, the current state of the art comprises a great number of valve systems intended to control suction and discharge of working fluid inside the compression chamber.

In accordance with the conventional functioning of a state-of-the-art valve system, it is observed that conventional suction valves have a normal closed configuration, and their automatic and uncommanded "opening" uniquely and exclusively occurs when the piston is at the superior dead point and descends to the lower dead point, that is, the current suction valves can only be kept "open" when the pressure inside the cylinder drops to a value that is lower than the pressure in the suction chamber.

Such an operability of the current suction valves, although functional, can be further improved since as it can be observed it is necessary to generate a favorable pressure difference such that they can "open" and in this connection, in addition to a higher starting force for the electric motor that moves the piston, a greater energy loss for pumping the fluid is required. Conventional solutions provide for an oversizing of this motor (to allow for it to "start" the compressor), or also the use of complex and expensive specific starting systems.

Concerning conventional discharge valves, they also have a normal-closed configuration, and their automatic and uncommanded "opening" uniquely and exclusively occurs when the piston travels from the lower dead point and goes towards the superior dead point, thereby increasing the pressure inside the cylinder, i.e. when the pressure inside the cylinder is higher than the pressure in the discharge chamber.

Such operability of the current charge valves although also functional prevents any sort of capacity modulation of the compressor in conjunction with the maintenance of the motor speed.

With regard to the current alternatives of capacity modulation of compressors

According to the widely spread state-of-the-art understanding, it is known that only compressors with variable speed are able to change an operation speed, thereby modulating the capacity thereof while the so-called ON-OFF computers do not have this advantage.

In the case of the cited compressors with variable speed, which are based on continuous current (VCC) electrical motors, it can be observed that as the compressor reduces its operation speed the lower is the gas mass displaced into any system (such as, for example, refrigeration systems), and, consequently, elevated gains of effectiveness increase in systems demanding varying gas masses can be obtained.

Current compressors with varying speed use a complex electronics in association with a permanent-magnet motor, and, generally, this association of magnets with electronics has high costs. Another limitation of such compressors refer to a minimum speed at which it can operate since this minimal rotation value is also directly connected with the compressor reliability.

Further, as a palliative alternative to the capacity modulation of compressors, the current state of the art provides certain solutions where suction and/or discharge orifices of a valve plate can have their diameter relatively altered (partially obstructed) during their respective functional step.

US Patent 3,844,686 discloses an electromagnetic mechanism capable of directly or indirectly promoting decrease/increase in the suction and/or discharge diameter; nevertheless, such mechanism only has relevant operability when suction or discharge valves are operationally "opened."

The application EP 1 338 794 discloses a reciprocating pump comprising poppet valves located above the valve plate, wherein the suction valve is housed in a vacuum housing. In this application, both poppet valves are electronically driven and they are dependent of a spring element, which is provided in order to keep such valves in a closed or opened condition.

Based on the above explained context, it can be clearly noted that the current state of the art concerning valve systems of reciprocating compressors essentially relies on non-flexible and non-customizable equivalent operational principles.

Furthermore, it is also noted that the current state of the art relative to means for modulating the capacity of reciprocating compressors refers to not entirely applicable solutions, or also to expensive solutions which are not applied to more ordinary applications.

A compressor provided with a semi-commanded system according to the prior art is also shown by JPS5779287.

Based on this scenario the present patent of invention was developed.

### Objects of the Invention

Hence, one object of the present invention is to provide for a valve system for reciprocating compressor capable of being semi-commanded at any time during the operational compression cycle. Hence, another object of the present invention is to make with which said now disclosed valve system allows for selective manipulation of the suction valve and/or the exhaustion valve.

Another object of the present invention is to provide for a method for modulating the capacity of the compressor by selectively switching said suction valve and/or the exhaustion valve. In this regard, a further object of the present invention is to provide for a method for modulating the capacity by refluxing working fluid.

Additionally, one of the objects of the present invention is to provide a method for modulating the capacity, wherein said method will also help to start the compressor motor.

Finally, another object of the present invention is to provide for a less expensive and more functional solution than those solutions for analogous purposes known from the current state of the art.

### Summary of the Invention

These and other objects are entirely accomplished by means of a semi-commanded valve system applied to reciprocating-type compressor (of the kind comprising at least a cylinder, at least a piston, at least a compression chamber and at least a valve acting in its respective orifice). The system itself comprises at least a valve (which comprises a prestressed mechanical valve in a first operational state, and comprising at least a ferrous portion) and at least a selectively actuated magnetic field generating element. According to the present invention, the operational state of said at least a valve is selectively switched by actuating said at least a magnetic field generating element.

The operational state of at least a valve is selectively switched between a first operational state and a second operational state by means of a magnetic pulse of the magnetic field generating element. In this sense, the first operational state of the valve is randomly designated as a "opened" state, and the second operational state of the valve as a "closed" state.

It is worth to mention here that, in accordance with the present invention, the valve can comprise a suction valve, or further, a discharge valve. With regard to the magnetic field generating element, same comprises an electric coil or the like. In a preferred mode, at least a valve and its respective magnetic field generating element are disposed on at least one valve plaque and in the case of more than one semi-commanded valve in accordance with the concepts hitherto disclosed, a magnetic insulation between the valves is provided.

The above-mentioned objects are also achieved in function of the method for modulating the capacity of a compressor provided with a semi-commanded valve system, which includes refluxing suction and/or exhaustion by means of non-spontaneous switching of at least one valve.

In this sense, spontaneous closing of at least one valve can be delayed, or, additionally, spontaneous opening of at least one valve is delayed.

Preferably, there is a delay in the spontaneous closing of the suction valve and a delay in the spontaneous opening of the discharge valve.

### Brief Description of the Figures

The conceptual embodiment of the presently disclosed semi-commanded valve system applied to a reciprocating compressor will be described in detail based on figure mentioned below, wherein:

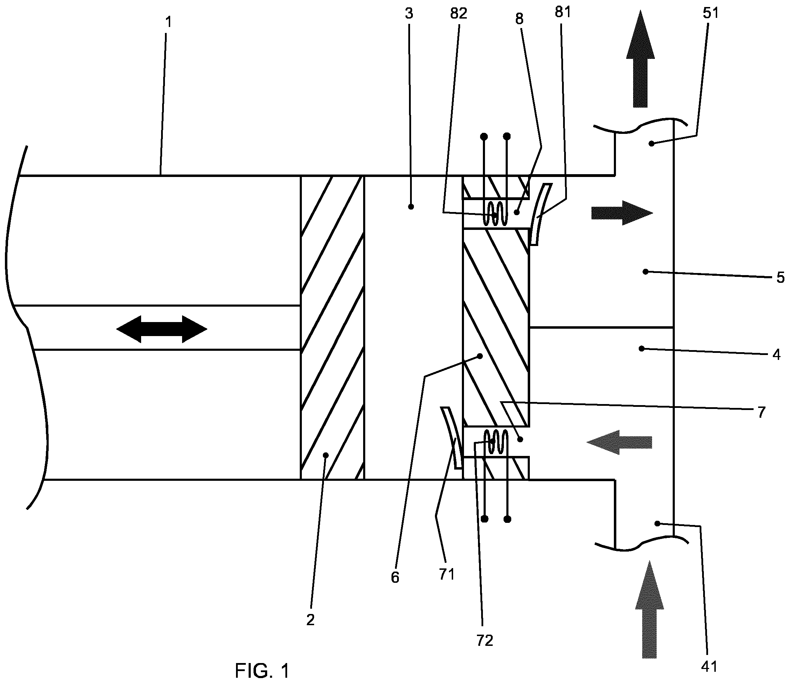

Fig. 1 illustrates a schematic model of a functional mechanism of a reciprocating compressor provided with the presently disclosed semi-commanded valve system.

### Detailed Description of the Invention

In accordance with the present invention and in order to achieve the objects mentioned above, a novel semi-commanded valve system applied to a reciprocating-type compressor is disclosed.

Generally, said system comprises at least a prestressed valve in a first operational state, and at least a ferrous portion, and at least a selectively actionable magnetic field generating element. By this way, the operational state of said at least a valve can be being selectively switched by actuating at least one magnetic field generating element.

In accordance with the conceptual embodiment illustrated in Fig. 1, it can be noted that the presently disclosed system uses devices having electric coils 72, 82 and prestressed valves 71, 81 in an opened state. Said valve remains opened due to the prestress, and said electric valve has the function of generating a magnetic field thereby favoring closing of the valve.

According this essential concept, said features can be applied to a suction valve 71 and/or a discharge valve 81.

The prestressed valves are positioned in alignment with their respective electric coils such that when activated they are in condition to generate a magnetic field thereby attracting its prestressed valve to the direction of the valve plate 6 aiming at sealing orifices 7, 8 (suction orifice and discharge orifice, respectively).

Hence, it is possible to modulate the capacity of the compressor with no need to vary the operational speed of its electric motor (not shown). By doing so, it is possible to control the mass amount passing through said suction orifice 7 and said discharge orifice 8 so as to obtain the desired functional capacity to increase the effectiveness of any system and, more specifically, a refrigeration system.

When in operation, the presently claimed system can cause the suction valve 71 and/or the discharge valve 81 to close at any time during the cycle of piston 2 (having a reciprocating displacement within cylinder 1), thus increasing or decreasing the volume of the compression chamber 3). There is also an option of not closing the valves. Therefore, it is possible to obtain alterations in the time of intently closing said valves to generate determined refluxes in the suction chambers 4 and/or discharge chamber 5 and, consequently, a capacity modulation will occur due to the fact that the amount of working fluid delivered to the system using a reciprocating compressor (preferably a refrigeration system) has been altered.

The system in accordance with the present invention has the advantage of prematurely opening the suction valve, since same is with the opening prestress. Such an advantage represents a reduction in the pressure to open the suction valve and, as a result, less energy will be consumed by the compressor. Furthermore, the suction valve will close at the time the electric coil is actuated or when the valve with prestress meets a pressure gradient favorable to closing. Hence, it is possible to alter the refrigeration gas flow that will be delivered to the refrigeration system by modulating the reflux in the suction valve.

This same concept can be applied to the discharge valve wherein when the piston starts from the lower dead point and travels towards to the superior dead point, pressure within the cylinder increases until it becomes higher than the pressure in the discharge chamber, and, at this time, the discharge valve will begin an opening movement, which is facilitated by the prestress of said valve. When the piston discharges the gas to the outside the cylinder and process of returning to the lower dead point begins, and the valve with prestress will remain opened to allow for the gas of the discharge chamber to return into the cylinder. This reflux will stop when the electric coil is driven, thereby closing said discharge valve. Said reflux represents the gas that has not been delivered to the system and allowed for a capacity modulation to occur.

Further, it is important to mention that actuation of the coils can be effected by simple electronics supplying sufficient electric current to generate a magnetic field and to close the valves.

After an exemplary embodiment of the present invention has been described, it should be construed that the scope thereof encompasses other possible variations, which are only limited by the contents of the appended claims.

## Claims

1. A method for modulating the capacity of a reciprocating compressor comprising a semi-commanded valve system, wherein said compressor comprises at least a cylinder (1), at least a piston (2), at least a compression chamber (3), and at least a valve plate (6) having suction and discharge orifices (7, 8), said system comprising:
at least a valve (71, 81) prestressed in the opened state and comprising at least a ferrous portion; and
at least a selectively actuated magnetic field generating element (72, 82);
the valve (71, 81) being selectively switched between the opened state and the closed state by actuating the magnetic field generating element (72, 82), and
the valve (71, 81) being switched between the closed state and the opened state automatically, wherein the valve (71, 81) and its respective magnetic field generating element (72, 82) are disposed at the valve plate (6), the magnetic field generating element (72, 82) is disposed inside its respective orifice (7, 8) and on the same plane defined by the valve plate, wherein the method comprises the step of refluxing the suction and/or exhaustion by non-spontaneous switching of said at least a valve (71, 81).

2. The method in accordance with claim 1, wherein the at least a valve (71, 81) is selectively switched between the opened state and the closed state by means of at least one magnetic pulse of the magnetic field generating element (72,82).

3. The method in accordance with claim 1, wherein the at least a valve comprises a suction valve (71).

4. The method in accordance with claim 1, wherein the at least a valve comprises a discharge valve (81).

5. The method in accordance with claim 1, wherein said magnetic field generating element (72, 82) comprises an electric coil.

6. The method in accordance with claim 1, wherein the at least a valve comprises a suction valve (71) and a discharge valve (81), and wherein at least a magnetic insulation is provided between said suction valve (71) and said discharge valve (81).

7. The method in accordance with any of the previous claims, wherein it delays the spontaneous opening of said at least a valve (71,81).

8. The method in accordance with claim 7, wherein it delays the spontaneous opening of a discharge valve (81).

## Patentansprüche

1. Verfahren zum Modulieren der Kapazität eines Linearverdichters, der ein halbgesteuertes Ventilsystem enthält, wobei der Verdichter wenigstens einen Zylinder (1), einen Kolben (2), wenigstens eine Kompressionskammer (3) und wenigstens eine Ventilplatte (6) mit Ansaug- und Ausgabeöffnungen (7, 8) enthält, wobei das System enthält:
wenigstens ein Ventil (71, 81), das in den geöffneten Zustand vorgespannt ist und wenigstens einen eisenhaltigen Teil enthält; und wenigstens ein selektiv betätigtes, ein Magnetfeld erzeugendes Element (72, 82);
welches Ventil (71, 81) automatisch zwischen dem geschlossenen Zustand und dem geöffneten Zustand geschaltet wird, wobei das Ventil (71, 81) und sein entsprechendes ein Magnetfeld erzeugendes Element (72, 82) an der ventilplatte (6) angeordnet sind und das ein Magnetfeld erzeugende Element (72, 82) innerhalb der entsprechenden Öffnung (7, 8) und auf derselben Ebene angeordnet ist, die durch die Ventilplatte definiert ist,
wobei das Verfahren den Schritt des Rückflusses des Ansaugens und/oder Ausstoßens durch nicht spontanes Schalten des wenigstens einen Ventils (71, 81) enthält.

2. Verfahren nach Anspruch 1, wobei das wenigstens eine Ventil (71, 81) selektiv zwischen dem geöffneten Zustand und dem geschlossenen Zustand mittels wenigstens einem magnetischen Impuls des ein Magnetfeld erzeugenden Elements (72, 82) geschaltet wird.

3. Verfahren nach Anspruch 1, wobei das wenigstens eine Ventil ein Saugventil (71) enthält.

4. Verfahren nach Anspruch 1, wobei das wenigstens eine Ventil ein Auslassventil (81) enthält.

5. Verfahren nach Anspruch 1, wobei das wenigstens eine ein Magnetfeld erzeugende Element (72, 82) eine elektrische Spule enthält.

6. Verfahren nach Anspruch 1, wobei das wenigstens eine Ventil ein Saugventil (71) und ein Auslassventil (81) enthält, und wobei wenigstens eine magnetische Isolation zwischen dem Saugventil (71) und dem Auslassventil (81) vorgesehen ist.

7. Verfahren nach einem der vorhergehenden Ansprüche, wobei es das spontane Öffnen des wenigstens einen Ventils (71, 81) verzögert.

8. Verfahren nach Anspruch 7, wobei es das spontane Öffnen eines Auslassventils (81) verzögert.

## Revendications

1. Un procédé pour moduler la capacité d'un compresseur alternatif comprenant un système de clapets semi-commandé, dans lequel ledit compresseur comprend au moins un cylindre (1), au moins un piston (2), au moins une chambre de compression (3) et au moins une plaque de clapets (6) ayant des orifices d'aspiration et de refoulement (7, 8), ledit système comprenant
au moins un clapet (71, 81) précontraint en état ouvert et comprenant au moins une partie ferreuse ; et
au moins un élément (72, 82) apte à générer un champ magnétique actionné sélectivement ;
le clapet (71, 81) étant commandé sélectivement entre son état ouvert et son état fermé en activant l'élément (72, 82) apte à générer un champ magnétique, et
le clapet (71, 81) étant commandé automatiquement entre son état ouvert et son état fermé,
dans lequel le clapet (71, 81) et son élément respectif (72, 82) apte à générer un champ magnétique sont disposés sur la plaque de clapets et l'élément (72, 82) apte à générer un champ magnétique est situé à l'intérieur de son orifice respectif (7, 8) et dans le même plan défini par la plaque de clapets,
selon lequel le procédé comprend l'étape de reflux de l'aspiration et/ou du refoulement par la commande non-spontanée d'au moins un clapet (71, 81).

2. Le procédé en accord avec la revendication 1, selon lequel le au moins un clapet (71, 81) est commandé sélectivement entre son état ouvert et son état de fermé au moyen d'au moins une impulsion magnétique de l'élément (72, 82) générateur de champ magnétique.

3. Le procédé en accord avec la revendication 1, selon lequel le au moins un clapet comprend un clapet d'aspiration (71).

4. Le procédé en accord avec la revendication 1, selon lequel le au moins un clapet comprend un clapet de refoulement (81).

5. Le procédé en accord avec la revendication 1, selon lequel ledit élément (72, 82) générateur de champ magnétique comprend une bobine électrique.

6. Le procédé en accord avec la revendication 1, selon lequel le au moins un clapet comprend un clapet d'aspiration (71) et un clapet de refoulement (81) et selon lequel au moins une isolation magnétique est prévue entre ledit clapet d'aspiration (71) et ledit clapet de refoulement (81).

7. Le procédé en accord avec l'une quelconque des revendications précédentes, selon lequel il retarde l'ouverture spontanée du dit au moins un clapet (71, 81).

8. Le procédé en accord avec la revendication 7, selon lequel il retarde l'ouverture spontanée d'un clapet de refoulement (81).
